# EUROPEAN PATENT SPECIFICATION

(11) **EP 2 922 286 B1**
(45) Date of publication and mention of the grant of the patent: **02.11.2016**
(21) Application number: 15159408.2
(22) Date of filing: 17.03.2015
(51) Int. Cl.: H04N 5/222, B65D 5/32

(54) **PROMPTING APPARATUS**
AUFFORDERUNGSVORRICHTUNG
APPAREIL D'INVITE

(30) Priority: 18.03.2014 US 201414218745
(43) Date of publication of application: 23.09.2015
(73) Proprietor: Promptbox International LLC, San Rafael, CA 94903 (US)
(72) Inventor: Vito, Linda, San Rafael, CA California 94903 (US)
(74) Representative: Dolleymores

(56) References cited:
- US-A1- 2012 171 926
- US-A1- 2013 329 112
- US-A1- 2014 016 030

## Description

This invention generally relates to an autocue displaying device that prompts a person speaking with an electronic visual text of a speech or script. In particular, this invention relates to a prompting apparatus that is foldable. Such apparatus may include a foldable box which allows a user to use a tablet device as the apparatus' display, and a mounting assembly which allows the user to couple the box with a video camera or a camcorder by steps which are as simple as loosening and fastening a few fasteners.

A teleprompter is an assembly which enables on-camera talent to look directly into the lens of the camera and read a prepared script text that is generated by a computer software application that allows scrolling up of the text so the reader can keep up with the up-coming text as she reads aloud. The reader sees the text reflected from a two-way mirror and the audience can only sees the scene being shot by the camera through the two-way mirror.

Such type of prompters evolved from the days of cathode ray TV tube displays. As a result, they were heavy off-camera devices that had to be mounted below the front of the camera on a "sled" between the camera and the camera pan and tilt head, which is then mounted on a tripod. Typically these prompters were heavy and time-consuming to mount and operate. Usually it takes a professional about 30 minutes to set-up, align, balance and trim and connect to a personal computer.

With the availability of small size, low-cost and lightweight LCD displays and tablet devices, it is now possible to design and build a prompter that is lightweight, mounts in a more industry standard manner and is very quick to mount, set-up and use.

It is an object of the present invention to provide a simple, lightweight, compact yet effective prompting apparatus that enables a speaker to look directly into a camera's lens which is hidden behind a prompting mirror and invisible to the speaker, and at the same time read the textual or other information shown on the prompting mirror, and that can be easily coupled with a video camera or a camcorder, particularly which has an accessory adapter shoe on its top.

It is a further object of the present invention to provide a prompting apparatus with a shrouded chamber immediately behind an inclined prompting mirror and the camera's lens is positioned in the chamber and behind the mirror such that unwanted light is blocked from entering the camera's lens and the best quality of the recorded images by the camera can be reached.

It is a still further object of the present invention to provide a prompting apparatus, which may support a tablet device facing down to the prompting mirror, which is positioned at a 45 degree angle to the display screen of the tablet device, such that unwanted light from the light sources above the apparatus can be blocked from directly shining on the display screen.

It is an additional object of the present invention to provide a prompting apparatus with a foldable housing, which can be conveniently popped-up for use and can be conveniently folded into a package when not in use. When the housing is popped-up, the tablet can be conveniently positioned as a ceiling facing down to the prompting mirror, which is positioned at a 45 degree angle to the tablet device's display screen, such that the interference on the display screen and the prompting mirror caused by unwanted light is minimized and the clarity of the images on the prompting mirror viewed by the speaker is maximized.

It is yet another object of the present invention to provide a mounting and adjustment assembly which enables a user to couple the prompting apparatus to a video camera or a camcorder which, preferably, has an accessory adapter shoe on its top.

The apparatus according to this invention includes a foldable prompter unit and a mounting and adjusting assembly for coupling the prompter unit to a video camera or a camcorder, herein after referred to as a camera, which preferably has an accessory adapter shoe, usually called accessory shoe, on its top.

The prompter unit, also called prompting box, includes a housing, an inclined two-way see-through mirror which is placed in the inner space of the housing, and may receive a tablet device which is placed at the top of the box with its display screen facing toward the mirror. The housing includes an open front, two opposite shrouding walls, a shrouding bottom, a rear shrouding wall and a member for holding a tablet device facing down to the mirror. The rear shrouding wall has an opening, or through-hole, for placing the camera's lens.

The tablet device's display screen is preferably at 45 degree angle to the see-through (i.e. two-way) mirror. The see-through mirror, which may be approximately 40∼60% reflective and 30∼40% transparent, and held in position at a 45 degree angle to the screen surface of the tablet device. The optical image on the tablet device's display screen is reflected to the two-way see-through mirror and then reflected to the eyes of a speaker who looks into the mirror. The lens of the camera is placed in the space behind the mirror. Because of reflection, only the images from the speaker's direction may enter the lens, and the images from the tablet's screen cannot be captured by the lens. The see-through mirror is detachable. When it is detached from the housing, the two opposite shrouding walls can be folded inwardly one after another and the bottom can be folded up, such that the box is folded into a flat compact for carrying convenience.

According to the present invention in a first aspect, there is provided a prompting apparatus as recited by Claim 1. Further, preferred, features are detailed in the dependent claims.

### BRIEF DESCRIPTION OF THE DRAWINGS

FIG. 1 is a schematic diagram illustrating a perspective view of a typical embodiment of the prompting apparatus according to the present invention;
FIG. 2 is a schematic diagram illustrating a perspective view of the prompting apparatus according to FIG. 1 when the cover is partially opened so that a tablet can be slid in;
FIG. 3 is a schematic diagram illustrating a perspective view of the housing of the prompting apparatus according to FIG. 1 when the see-through mirror is detached from the housing;
FIG. 4 is a schematic diagram illustrating a perspective view of the housing of the prompting box according to FIG. 1;
FIG. 5 is a schematic diagram illustrating the side walls of the housing being folded inwardly;
FIG. 6 is a schematic diagram illustrating another perspective of FIG. 5;
FIG. 7 is a schematic diagram illustrating the side walls of the housing having been fully folded;
FIG. 7a is a schematic diagram illustrating another perspective of FIG. 7;
FIG. 7b is a schematic diagram illustrating the bottom of the housing being folded up;
FIG. 7c is a schematic diagram illustrating the bottom of the housing having been fully folded up;
FIG. 8 is a schematic diagram illustrating a smaller size tablet being coupled with the apparatus;
FIG. 9 is a schematic diagram illustrating a bigger size tablet being coupled with the apparatus; and
FIG. 10 is a schematic diagram illustrating the prompting apparatus with an alternative cover adaptive to the bigger size tablet for prompting.

### DETAILED DESCRIPTION OF THE INVENTION

While the present invention may be embodied in many different shapes, forms, designs or configurations, for the purpose of promoting an understanding of the principles of the invention, reference will be made to the non-limiting embodiments illustrated in the drawings and specific language will be used to describe the same. Numerous modifications will be apparent to those skilled in the art, within the scope of the proceeding claims.

The present invention discloses and teaches a prompting apparatus for coupling with a camera for video recording which, preferably, has an accessory adapter shoe on its top.

In a first non-limiting example, the apparatus includes: (1) a rectangular housing with an open front defined by a pair of symmetrical opposite side walls which are parallel to each other, a bottom which is typically a flat board, and a rear wall with a round opening for positioning and aligning the camera's lens; (2) a flat see-through mirror being fittingly placed in the housing with its upper edge being operably coupled to the top edge of the rear wall or the upper portions of the side walls, its lower edge being placed against the front edge of the bottom such that the see-through mirror, the side walls, the bottom and the rear wall forming a chamber wherein the lens is positioned and aligned behind the see-through mirror; (3) a cover operably coupled to the side walls through two pairs of fastening means such as bolts, the cover and the side walls defining a space for holding a tablet device with its screen facing down at an angle of approximately 45 degrees from the see-through mirror and in operation, image on the screen being reflected by the see-through mirror to a speaker's eyes seeing into the see-through mirror while light from the speaker passing through the see-through mirror into the lens; and (4) a mounting and adjusting hardware assembly for coupling the housing with the camera through the accessory adapter shoe. In operation, the speaker can only see the text reflected by the mirror but cannot see the lens hiding behind the mirror. Similarly, the camera can only capture the images in front of the mirror but cannot capture the text reflected from the tablet device's screen.

The left side wall is operably coupled to the rear wall's left side via a first hinging means such as one or a pair of small hinges and the right side wall is operably coupled to the rear wall's right side via a second hinging means, such as one or a pair of small hinges. Each of the opposite side walls has a narrow shoulder toward inside for supporting the tablet device. The narrow shoulder may be a strip bent from the side wall. The purpose of the narrow shoulders is to support the tablet device, or optionally support a piece of flat glass, or other element, which supports the tablet device.

The bottom includes two coupling means located at the rear end. The coupling means such as a bolt and nut enables the bottom board to be folded up after the two side walls are folded inward. In a typical embodiment, the bottom includes a pair of symmetrical opposite wings, and each wing has a coupling means, such as a bolt, at its rear end for coupling the bottom to the rear wall's vertical side or a frame.

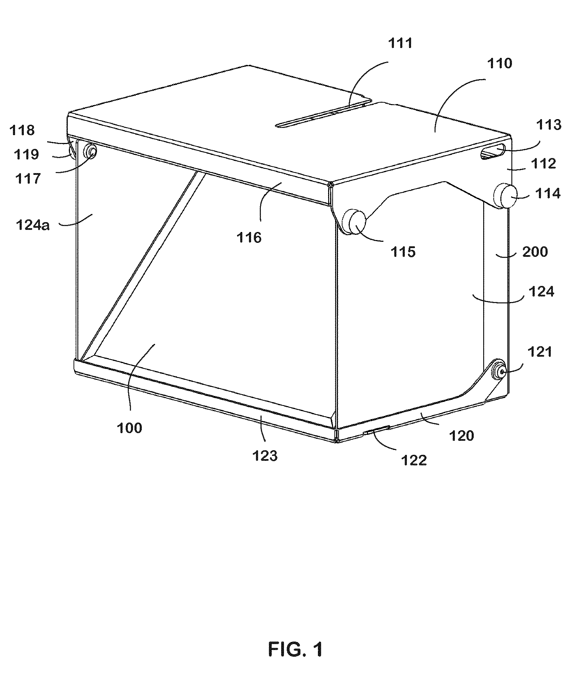

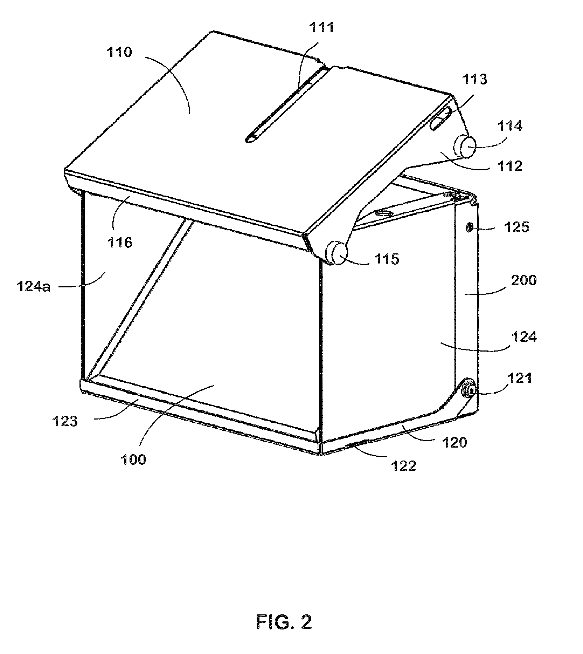

FIG. 1 illustrates a perspective view of a typical preferred embodiment of the prompting box according to the present invention. FIG. 2 is a schematic diagram illustrating the prompting apparatus according to FIG. 1 when the cover is partially opened so that a tablet device can be slid in. The apparatus includes two symmetrical opposite side walls 124 and 124a which are parallel to each other, a bottom board with front edge 123, a see-through mirror 100, and a cover 110.

The cover 110 preferably includes an adapting groove or slot 111 for coupling the box with a camera through a mounting and adjusting assembly. Of course alternative attachment means may be provided as will be readily appreciated by those skilled in the art. The cover 110 may be coupled to the side walls 124 and 124a by two pairs of bolts such as 114, 115 and 119 shown in FIG. 1. The cover 110 may also include a slot such as the opening 113 on each side for the user's convenience to operate the tablet device which is placed under the cover 110.

The bottom board's side wing 120 is adapted to the rear wall's side frame 200 through a pair of coupling means, such as a bolt 121.

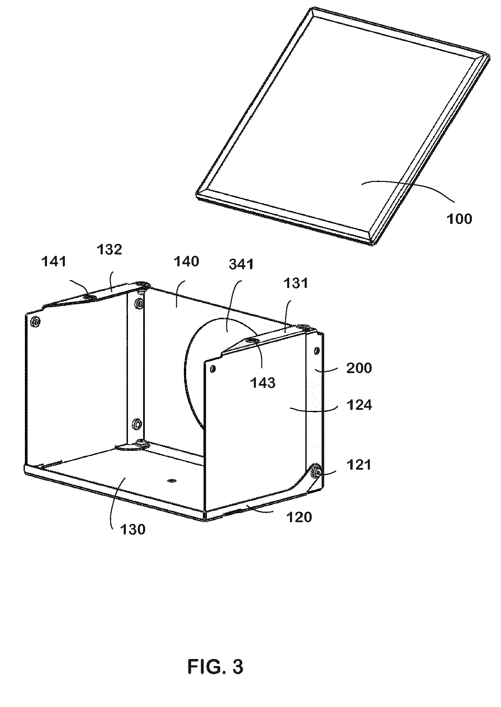

The inclined two-way mirror 100 is a see-through mirror. It preferably has an optical grade of approximately 60∼70% reflective and approximately 30∼40% transparent. It is held in position at a 45 degree angle to the display screen of the tablet which is placed inside the space defined by the cover 110 and the two symmetrical side walls' shoulders 131 and 132 shown in FIG. 3 which is a schematic diagram illustrating a perspective view of the housing of the prompting box according to FIG. 1 when the see-through mirror 100 is detached from the housing. The shoulder can a strip bent from the same piece of material of the side wall or a strip of different material vertically welded to the side wall.

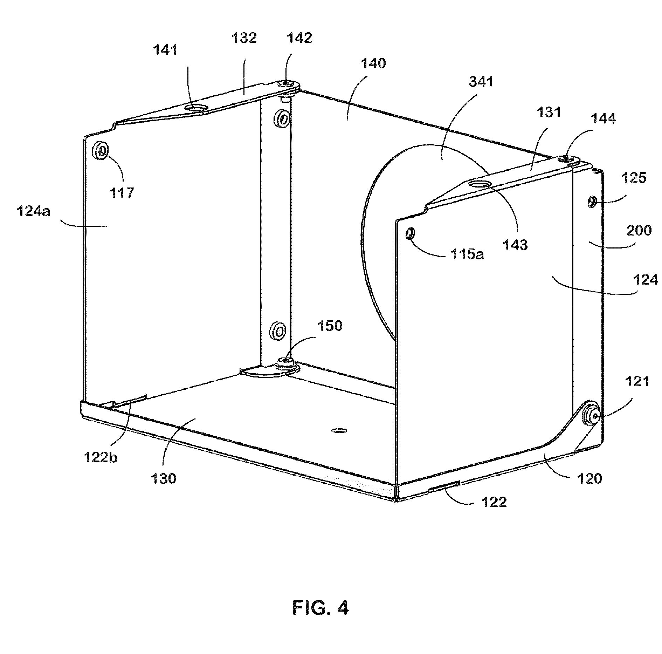

FIG. 4 is a schematic diagram illustrating a perspective view of the housing of the prompting box according to FIG. 1. The side wall 124 can be folded inward through a pair of bolts and nuts such as bolt 144 on the upper portion. The bottom board 130 has a pair of symmetrical opposite wings such as the right wing 120, which is a strip of metal or plastic or other solid material vertical to the bottom board. The right wing 120 has a female member 122 in its front portion. The side wall can be coupled to the wing by coupling a male member located at the lower front portion of the side wall to the female member on the wing. Of course the male and female members may be swapped around. The right wing 120 is coupled to the support frame 200 of the rear wall 140 through a hinging means such as a bolt and nut 121.

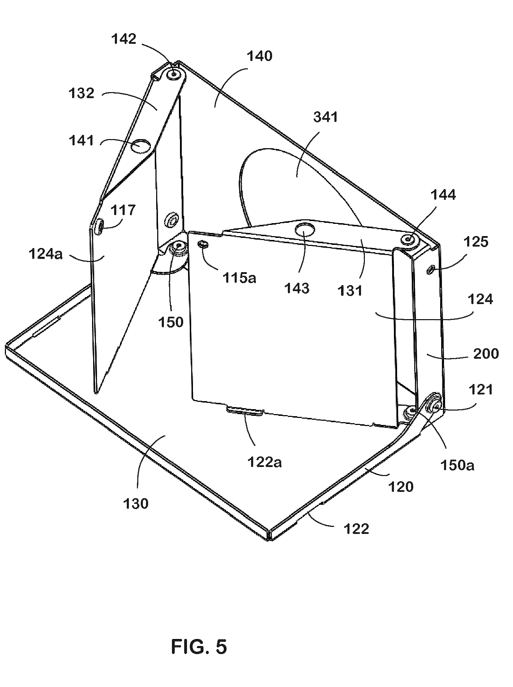

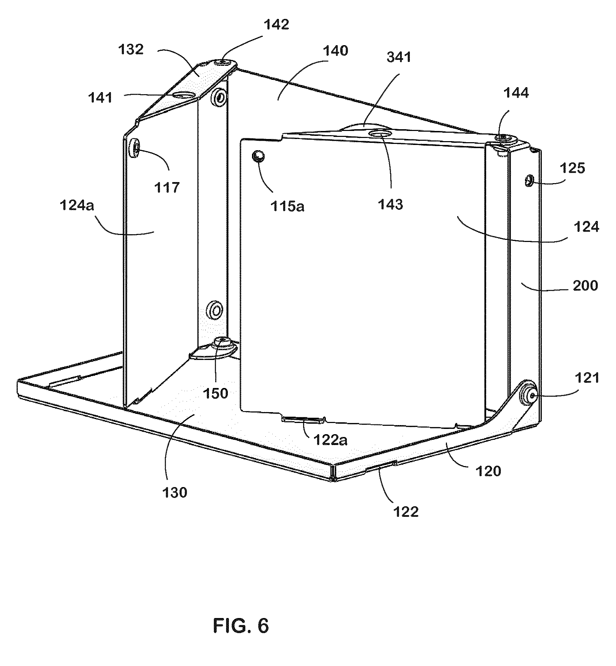

FIG. 5 and FIG. 6 are schematic diagrams illustrating the side walls of the housing being folded inwardly. When the right side wall 124 is turned inward by the hinging means 144 and 150a, the male member 122a on the lower front portion of the right side wall 124 is separated from the female member 122. As mentioned above, the left side wall 124a is symmetrical to the right side wall 124.

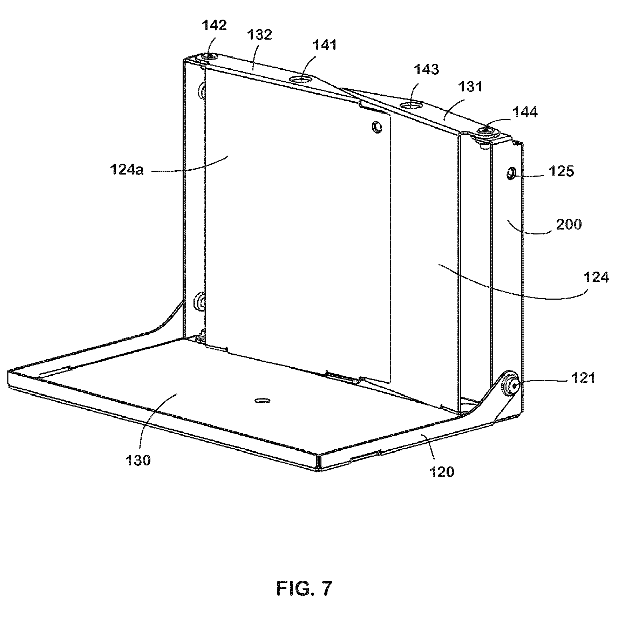

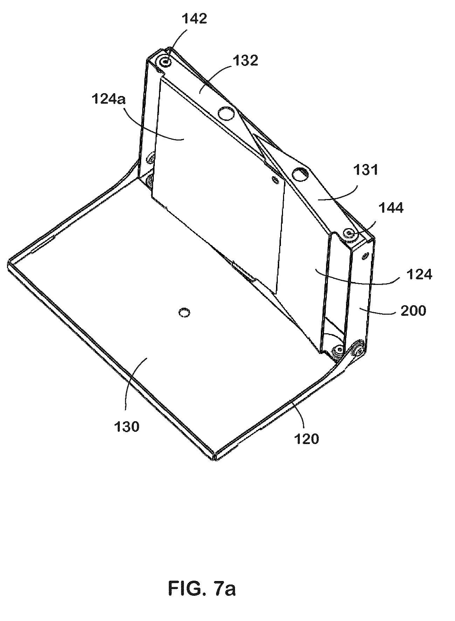

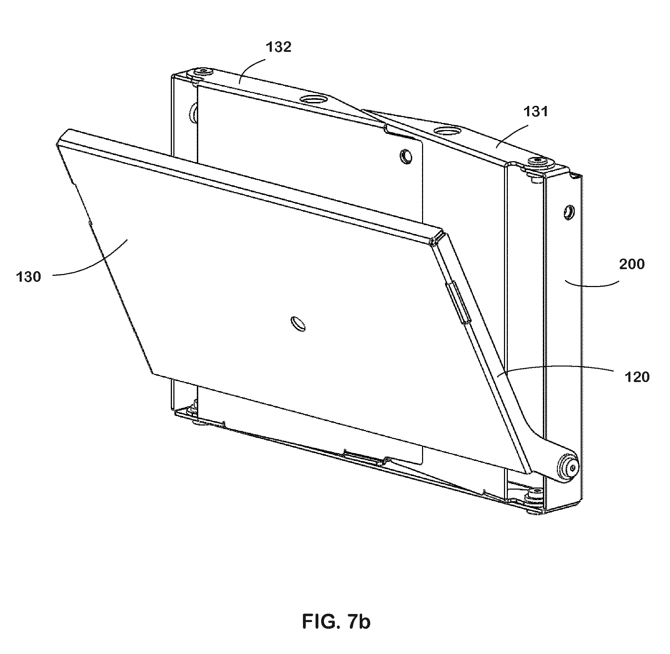

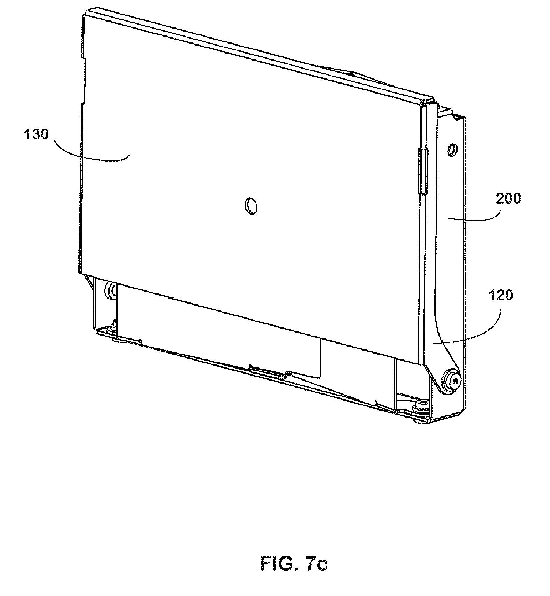

FIG. 7 and FIG. 7a are schematic diagrams illustrating the side walls of the housing having been fully folded. When both right and left side walls 124 and 124a are folded, bottom board 130 can be folded up by the hinging means such as the bolt and nut 121 on the right wing 120 and the corresponding member on the left wing. FIG. 7b is a schematic diagram illustrating the bottom of the housing being folded up. FIG. 7c is a schematic diagram illustrating the bottom of the housing having been fully folded up. The side walls 124/124a and the bottom board 130 are fittingly integrated as a flat compact.

Referring back to FIG. 3 - FIG. 7, the right wall 124 has a shoulder 131 which is vertical to the right wall 124. On the shoulder 131, there may be provided a female member 143 which is for fastening a glass connector, such as a rubber sucker. The right wall 124a has a shoulder 132 which is vertical to the left wall 124a. On the shoulder 132, there may again be provided a female member 141 which is for fastening a glass connector, such as a rubber sucker. Of course other fastening arrangements for the glass connectors may be provided. When the box is fully spread as illustrated in FIG. 4, i.e. when the bottom board 130 is released to the position vertical to the rear wall 140, the right side wall 124 is released to the position vertical to the rear wall 140, the left side wall 124a is released to the position vertical to the rear wall 140, a piece of flat glass can be placed in the plane defined by the connectors 141/143 and the members 142/144.

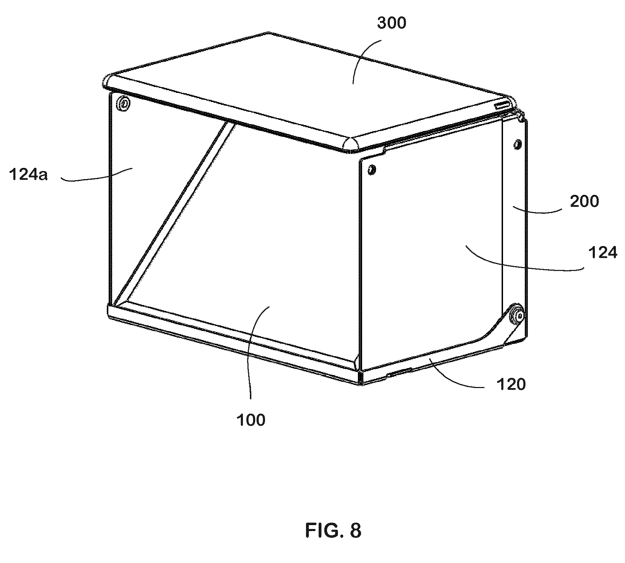

In operation, the piece of glass is optional. If the longest measurement of a tablet such as mobile phone is narrower than the distance between the side walls 124/124a, the flat glass is needed. In that case, the mobile phone is placed on the flat glass, facing down to the bottom board 130, and then it is fastened after the cover 110 (referring to FIG. 1- FIG. 2) is closed. However, if the two-dimensional measurement of the tablet is approximately same as the two-dimensional measurement of the top view of the box as illustrated in FIG. 8, the flat glass is not necessary. In that case, the tablet 300 is placed facing down to the bottom board 130. It was supported by the side walls' shoulders. After the cover 110 (referring to FIG. 1- FIG. 2) is closed, the tablet is fastened.

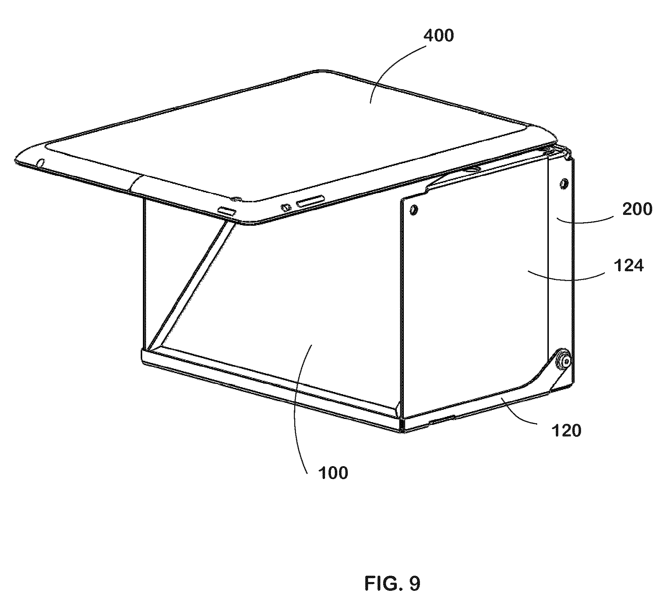

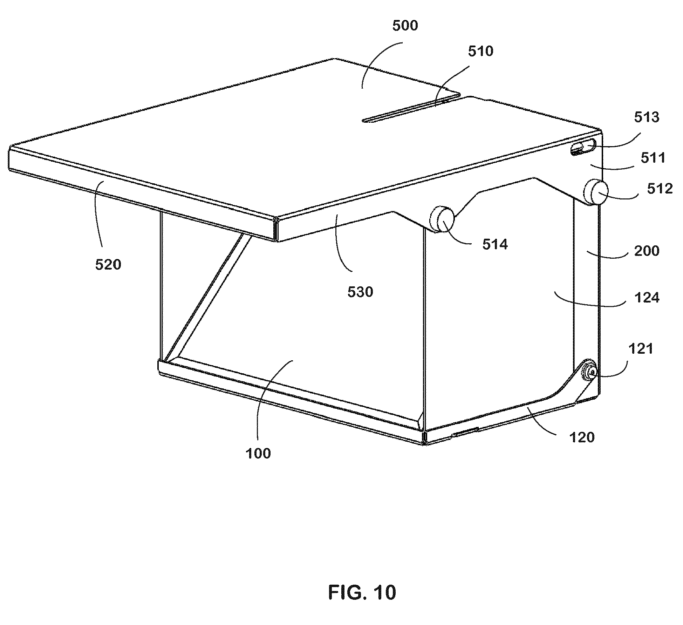

The prompting box according to this invention may include an alternative cover for using bigger size tablet. As illustrated in FIG. 9, a bigger size tablet 400 can be used in the apparatus. The tablet's width is approximately same as, or slightly narrower than, the distance between the side walls. But its length is longer than depth of the box. The tablet 400 is placed facing down to the mirror 100. It can be fastened using the alternative cover 500 as illustrated in FIG. 10. Similar to the smaller cover 110 as illustrated in FIG. 1 and FIG. 2, the alternative cover 500 may include an adaptive slot 510 for coupling the box to a camera, an opening 513 for the user's to operate the tablet, and two pairs of fastening means such as bolts 512 and 514.

The prominent advantage of the present invention is that when apparatus is not in use, the prompting box can be easily folded into a flat compact for the user's carrying convenience.

While one or more embodiments of the present invention have been illustrated above, the skilled artisan will appreciate that modifications and adoptions to the embodiments may be made without departing from the scope of the proceeding claims.

## Claims

1. A prompting apparatus, which can be coupled with a camera for video recording via a mounting and adjusting hardware assembly, comprising:
a rectangular housing with an open front defined by a pair of symmetrical opposite side walls, a bottom, and a rear wall with a round opening for positioning and aligning a lens of the camera;
a see-through mirror being placed in said housing with its lower edge being operably coupled to said bottom's front and its upper edge being operably coupled to said side walls' upper portions such that said see-through mirror, said side walls, said bottom and said rear wall form a chamber wherein said lens is positioned and aligned behind said see-through mirror;
a cover operably coupled to said housing, said cover and said housing defining a space for holding a tablet device with its screen facing down at an angle of approximately 45 degrees from said see-through mirror, whereby, in operation, an image on said screen is reflected by said see-through mirror to a speaker's eyes seeing into said see-through mirror while light from said speaker passes through said see-through mirror into said lens;
wherein each of said symmetrical opposite side walls comprises a shoulder at its upper portion to support said tablet device and a joint at its rear side for coupling said side wall to said rear wall's vertical side,
wherein said bottom has a pair of symmetrical wings located at its left and right sides, each of which comprises a joint at said wing's rear end for coupling said bottom to said rear wall's vertical side,
wherein said cover comprises an adaptive slot for coupling with said mounting and adjusting hardware assembly, and
wherein said cover and said see-through mirror are removable from said housing, and said symmetrical opposite side walls are adapted to be folded inwardly and said bottom is adapted to be folded up such that said housing is foldable into a flat compact.

2. The prompting apparatus of claim 1, wherein each of said symmetrical opposite side walls further comprises a male member at said side wall's front lower edge; wherein each of said symmetrical wings further comprises a female member at said wing's front lower edge, and wherein when said side walls are fully opened, said male member is coupled with said female member.

3. The prompting apparatus of claim 1 or 2, wherein said cover is fastened to said housing with bolts.

4. The prompting apparatus of any preceding claim, wherein said cover comprises at least one opening on its side for a user's operation of said tablet device.

5. The prompting apparatus of any preceding claim, wherein said shoulder comprises a female member for fastening a glass connector to said side wall.

6. The prompting apparatus of any preceding claim further comprising an alternative cover, said cover's inner width being approximately the same as said housing's outer width and said cover's length being longer than said housing's depth.

## Patentansprüche

1. Aufforderungsvorrichtung, die sich mit einer Kamera für Videoaufnahme über eine Halterung und einstellbare Hardware-Anordnung koppeln lässt, umfassend:
Ein rechteckiges Gehäuse mit einer offenen Front, die durch ein Paar von symmetrischen gegenüberliegenden Seitenwänden definiert ist, einer Basis und einer Rückwand mit einer runden Öffnung zum Positionieren und Ausrichten einer Linse der Kamera;
einen durchsichtigen Spiegel, der in das Gehäuse platziert wird, wobei seine untere Kante betriebsfähig an die Front der Basis gekoppelt wird und seine obere Kante betriebsfähig an die oberen Abschnitte der Seitenwände gekoppelt wird, derart, dass der durchsichtige Spiegel, die Seitenwände, die Basis und die Rückwand eine Kammer bilden, worin die Linse positioniert und hinter dem durchsichtigen Spiegel ausgerichtet wird;
einen Deckel, der betriebsfähig an das Gehäuse gekoppelt ist, wobei der Deckel und das Gehäuse einen Raum zum Halten eines Tablet-Geräts definieren, das mit seinem Bildschirm in einem Winkel von ca. 45 Grad ab dem durchsichtigen Spiegel nach unten gewandt ist, wodurch, in Betrieb, ein Bild auf dem Bildschirm vom durchsichtigen Spiegel auf die Augen eines Redners reflektiert wird, der in den durchsichtigen Spiegel schaut, während Licht vom Redner durch den durchsichtigen Spiegel in die Linse passiert;
wobei jede der symmetrisch gegenüberliegenden Seitenwände eine Schulter an ihrem oberen Abschnitt zum Stützen des Tablet-Geräts und eine Fuge an ihrer Rückseite zum Koppeln der Seitenwand an die senkrechte Seite der Rückwand umfasst,
wobei die Basis ein Paar von symmetrischen Flügeln aufweist, die sich auf ihren linken auf rechten Seiten befinden, jede davon eine Fuge am hinteren Ende des Flügels zum Koppeln der Basis an die senkrechte Seite der Rückwand umfasst,
wobei der Deckel einen adaptiven Schlitz zum Koppeln der Halterung und der einstellbaren Hardware-Anordnung umfasst, und
wobei der Deckel und der durchsichtige Spiegel aus dem Gehäuse entfernbar sind, und die symmetrisch gegenüberliegenden Seitenwände angepasst sind, nach innen gefaltet zu werden und die Basis angepasst ist, derart nach oben gefaltet zu werden, dass sich das Gehäuse zu einer flachen Kompaktform falten lässt.

2. Aufforderungsvorrichtung nach Anspruch 1, wobei jede der symmetrischen gegenüberliegenden Seitenwände ferner ein männliches Element an der vorderen unteren Kante der Seitenwand umfasst;
wobei jeder der symmetrischen Flügel ferner ein weibliches Element an der vorderen unteren Kante des Flügels umfasst, und wobei, wenn die Seitenwände voll geöffnet sind, das männliche Element mit dem weiblichen Element gekoppelt wird.

3. Aufforderungsvorrichtung nach Anspruch 1 oder Anspruch 2, wobei der Deckel mit Bolzen am Gehäuse befestigt ist.

4. Aufforderungsvorrichtung nach einem vorhergehenden Anspruch, wobei der Deckel wenigstens eine Öffnung an seiner Seite zum Betreiben des Tablet-Geräts seitens eines Benutzers umfasst.

5. Aufforderungsvorrichtung nach einem vorhergehenden Anspruch, wobei die Schulter ein weibliches Element zum Befestigen eines Glas-Steckverbinders an die Seitenwand umfasst.

6. Aufforderungsvorrichtung nach einem vorhergehenden Anspruch, die ferner einen alternativen Deckel umfasst, wobei die innere Breite des Deckels ca. die gleiche wie die äußere Breite des Gehäuses ist und die Länge des Deckels länger als die Tiefe des Gehäuses ist.

## Revendications

1. Appareil d'invite, qui peut être accouplé à une caméra d'enregistrement vidéo par l'intermédiaire d'un ensemble de matériel de montage et de réglage, comportant :
un boîtier rectangulaire avec une partie avant ouverte que définissent une paire de parois latérales opposées symétriques, un fond, et une paroi arrière avec une ouverture ronde à des fins de positionnement et d'alignement d'un objectif de la caméra ;
un miroir sans tain qui est placé dans ledit boîtier avec son bord inférieur qui est fonctionnellement accouplé à l'avant dudit fond et son bord supérieur qui est fonctionnellement accouplé aux parties supérieures desdites parois latérales de telle sorte que ledit miroir sans tain, lesdites parois latérales, ledit fond et ladite paroi arrière forment une chambre dans laquelle ledit objectif est positionné et aligné derrière ledit miroir sans tain ;
un couvercle fonctionnellement accouplé audit boîtier, ledit couvercle et ledit boîtier définissant un espace servant à tenir un dispositif de type tablette avec son écran orienté vers le bas selon un angle d'environ 45 degrés par rapport au miroir sans tain, ce par quoi, lors de l'utilisation, une image sur ledit écran est réfléchie par ledit miroir sans tain à destination des yeux de l'orateur qui regardent dans ledit miroir sans tain alors que le lumière en provenance dudit orateur passe au travers dudit miroir sans tain jusque dans ledit objectif ;
dans lequel chacune desdites parois latérales opposées symétriques comporte un épaulement au niveau de sa partie supérieure à des fins de support dudit dispositif de type tablette et un joint au niveau de son côté arrière à des fins d'accouplement de ladite paroi latérale au niveau du côté vertical de ladite paroi arrière,
dans lequel ledit fond a une paire d'ailettes symétriques situées au niveau de ses côtés gauche et droit, dont chacune comporte un joint au niveau de l'extrémité arrière de ladite ailette à des fins d'accouplement dudit fond au niveau du côté vertical de ladite paroi arrière,
dans lequel ledit couvercle comporte une fente adaptative à des fins d'accouplement audit ensemble de matériel de montage et de réglage, et
dans lequel ledit couvercle et ledit miroir sans tain sont en mesure d'être déposés dudit boîtier, et lesdites parois latérales opposées symétriques sont adaptées pour être pliées vers l'intérieur et ledit fond est adapté pour être plié vers le haut de telle sorte que ledit boîtier est en mesure d'être plié de manière plate et compacte.

2. Appareil d'invite selon la revendication 1, dans lequel chacune desdites parois latérales opposées symétriques comporte par ailleurs un élément mâle au niveau du bord inférieur avant de ladite paroi latérale ; dans lequel chacune desdites ailettes symétriques comporte par ailleurs un élément femelle au niveau du bord inférieur avant de ladite ailette, et dans lequel, quand lesdites parois latérales sont entièrement ouvertes, ledit élément mâle est accouplé audit élément femelle.

3. Appareil d'invite selon la revendication 1 ou la revendication 2, dans lequel ledit couvercle est attaché audit boîtier au moyen de boulons.

4. Appareil d'invite selon l'une quelconque des revendications précédentes, dans lequel ledit couvercle comporte au moins une ouverture sur son côté pour qu'un utilisateur puisse utiliser ledit dispositif de type tablette.

5. Appareil d'invite selon l'une quelconque des revendications précédentes, dans lequel ledit épaulement comporte un élément femelle à des fins d'attache d'un connecteur de verre au niveau de ladite paroi latérale.

6. Appareil d'invite selon l'une quelconque des revendications précédentes, comportant par ailleurs un différent couvercle, la largeur intérieure dudit couvercle étant approximativement identique à la largeur extérieure dudit boîtier et la longueur dudit couvercle est plus longue par rapport à la profondeur dudit boîtier.
